# EUROPEAN PATENT APPLICATION

(11) **EP 4 597 199 A1**
(43) Date of publication of application: **06.08.2025**
(21) Application number: 23871423.2
(22) Date of filing: 26.07.2023
(51) Int. Cl.: G02B 26/10, G01S 7/481, G01S 17/10, G08B 13/184

(54) **SCAN SENSOR**

(30) Priority: 27.09.2022 JP 2022153399
(71) Applicant: Optex Co., Ltd., Otsu-shi, Shiga 520-0101 (JP)
(72) Inventor: KAWAHATA, Yasutaka, Otsu-shi, Shiga 520-0101 (JP)
(74) Representative: Müller Hoffmann & Partner
(86) International application number: PCT/JP2023/027434
(87) International publication number: WO 2024/070180

(57) **Abstract**

The present invention is provided with the goal of being able to scan scanning light along a plurality of planes surrounding an object of interest for crime prevention while reducing the labor of installing a sensor as well as minimizing the costs thereof. The scan sensor 100 of the present invention includes a sensor unit 10 that includes a light source and a scanning mechanism that scans light emitted from the light source along a predetermined plane, and an optical system 30 that converts first scanning light that is scanned along the predetermined plane into second scanning light, which is scanned along three planes that are different from the predetermined plane and are orthogonal to each other, the optical system 30 including reflective surfaces 31 each of which corresponds to one of the three planes.

## Description

### Technical Field

The present invention relates to a scan sensor used for crime prevention or the like.

### Background Art

As shown in Patent Literature 1, a conventional scan sensor used for crime prevention or the like in important facilities is configured to detect intruders or the like in a predetermined plane by rotating a mirror and reflecting laser light off the mirror to scan along the predetermined plane.

Important facilities may include, for example, facilities that store or display rare items or valuable items or the like, and such facilities have shelves that house stored items or displayed items, so it is important to be able to detect attempted access to these shelves.

However, when trying to detect access to a shelf using the aforementioned scan sensor, it is necessary to scan the laser light along five planes, excluding the bottom surface of the shelf. In other words, five scan sensors are required, which creates problems such as the labor of installing the sensors and increased costs.

In addition, the above-mentioned problems are not limited to cases where the object of interest to be protected from crime is a shelf, but commonly occurs more generally in cases where it is necessary to scan scanning light along a plurality of planes surrounding the object of interest for crime prevention, such as bronze statues or other works of art.

### Prior Art Literature

### Patent Literature

Patent Literature 1 JP 2017-227569 A

### Summary of Invention

### Problem to be Solved by the Invention

The present invention was created to solve the problems described above, and its object is to make it possible to scan scanning light along a plurality of planes surrounding an object of interest for crime prevention while reducing the labor of installing a sensor, as well as minimizing the costs thereof.

### Solution to the Problem

A scan sensor according to the present invention includes a sensor unit including a light source and a scanning mechanism that scans light emitted from the light source along a predetermined plane, as well as an optical system that converts first scanning light that is scanned along the predetermined plane into second scanning light, which is scanned along three planes that are different from the predetermined plane and are orthogonal to each other.

Moreover, in this specification, 'scanning along a plane' is a concept that includes not only scanning in a direction parallel to the plane but also scanning in a direction slightly inclined to the plane.

A scan sensor according to this configuration converts first scanning light, which is scanned along a predetermined plane, into second scanning light, which is scanned along three planes that are different from said predetermined plane and are orthogonal to each other, and therefore a single scan sensor can be used to scan scanning light along three planes that are orthogonal to each other.

As a result, the number of sensors required can be reduced compared to a configuration in which one sensor can scan scanning light in only one plane, so that it is possible to scan scanning light along at least three planes surrounding an object of interest of crime prevention while reducing the labor of installing a sensor, as well as minimizing the costs thereof.

It is preferrable that the three planes are a plane along a horizontal direction and two mutually orthogonal planes along a vertical direction.

A configuration like this is conducive to the crime prevention for objects of interest that have a rectangular cuboid shape or a cubic shape, such as a shelf or the like.

It is preferrable that the optical system includes reflective surfaces each of which corresponds to one of the three planes, and that the first scanning light is light that is rotationally scanned around a predetermined axis and is reflected by each of the reflective surfaces.

With a configuration like this, the first scanning light can be converted to the second scanning light via a reasonable configuration and, for example, the second scanning light can be scanned over a wide range in each plane while keeping the distance from the first scanning light to the reflective surfaces short. This enables high-density scanning of the second scanning light in three planes while keeping the product compact.

If one were to, hypothetically, try to convert the first scanning light into a second scanning light along three planes using two reflective surfaces, for example, the reflective surfaces would have to be enlarged in order to scan the second scanning light over a wide range in each plane, making it difficult to create a design that is compact and that carries out high-density scanning.

It is further preferable that the reflective surfaces are provided around a vertex portion of an object of interest that has a rectangular cuboid shape or a cubic shape, and that the sensor unit is attached to said vertex portion.

With this configuration, three planes can be set to be the surveillance area via a simple configuration.

It is preferrable to further include a holding body that is attachable to the vertex portion, and that the sensor unit is held by the holding body.

This configuration allows for easier installation of the sensor unit to the object of interest.

The top surface and side surface of the object of interest, such as a shelf or the like, may be slightly inclined with respect to the horizontal plane or the vertical plane.

Therefore, it is preferable to include an optical adjustment mechanism that adjusts the position or the angle of the optical system.

With this configuration, the position or angle of the optical system can be adjusted according to the aforementioned inclination, and the three planes of the surveillance area can be set optimally, improving detection reliability.

Also, this allows for greater freedom in setting the direction of the second scanning light, making it possible to meet various requirements at the installation site.

For example, if the second scanning light is scanned in a direction orthogonal to a wall surface or a floor surface, there is a risk of a false detection occurring due to reflection of the second scanning light off the wall surface or the floor surface.

Therefore, it is preferable that the optical adjustment mechanism adjusts the optical system so that the second scanning light is, with respect to the first scanning light, directed at an acute angle or obtuse angle relative to an orthogonal direction.

With this configuration, the reflection of the second scanning light off the wall surface or the floor surface can be avoided, preventing the occurrence of the aforementioned false detections.

If one wanted to set five planes to form the surveillance area, excluding the bottom surface of the shelf, two of the scan sensors according to the present invention could be used.

However, if this were done, one plane of the five planes, such as the top surface of the shelf, would be scanned by the second scanning light of one of the scan sensors as well as by the second scanning light of the other scan sensor and, as a result, the second scanning light of one scan sensor may be detected by the other scan sensor, which could lead to a false detection.

Therefore, it is preferable that it is possible to change the surveillance area in each of the three planes independently.

Via such a configuration, one plane of the three planes could be excluded from the surveillance area in one of the scan sensors, preventing the aforementioned false detection.

Moreover, if a switch or other operating unit operated by many people is installed on the side surface of the object of interest X such as a shelf, the side surface of the object of interest can be excluded from the surveillance area to remove the switch or other operating unit from being surveilled.

### Effect of the Invention

According to the present invention, it is possible to scan scanning light along a plurality of planes surrounding an object of interest for crime prevention while reducing the labor of installing a sensor, as well as minimizing the costs thereof.

### Brief Description of the Drawings

FIG 1: Schematic diagram of the sensor unit of the present invention according to one embodiment.
FIG 2: Schematic diagram showing, in the same embodiment, the scan sensor in an installed state.
FIG 3: Exploded view of the scan sensor of the same embodiment.
FIG 4: Schematic diagram showing the second scanning light of the same embodiment.
FIG 5: Schematic diagram showing the arrangement of the mirrors of the same embodiment.
FIG 6: Schematic diagram showing the optical adjustment mechanism of the same embodiment.
FIG 7: Schematic diagram showing an aspect of the optical adjustment mechanism of the same embodiment.
FIG 8: Schematic diagram showing an aspect of the optical adjustment mechanism of the same embodiment.
FIG 9: Schematic diagram showing the scan sensor in an installed state in another embodiment.
FIG 10: Schematic diagram showing the scan sensor in an installed state in another embodiment.
FIG 11: Schematic diagram showing the scan sensor in an installed state in another embodiment.
FIG 12: Schematic diagram showing the position adjustment mechanism of another embodiment.

### Description of the Embodiments

The scan sensor in one embodiment of the present invention will be described with reference to the drawings.

### Scan Sensor Configuration

A scan sensor of this embodiment is used for indoor crime prevention, and a specific embodiment is one installed in facilities with shelves that house stored items or displayed items such as rare items or valuable items to prevent access to the shelves by intruders.

Moreover, in other embodiments the scan sensor may be used to prevent intruders from accessing bronze statues or other works of art, and may be used not only indoors, but also installed in important outdoor facilities, such as nuclear power plants or airport facilities or the like.

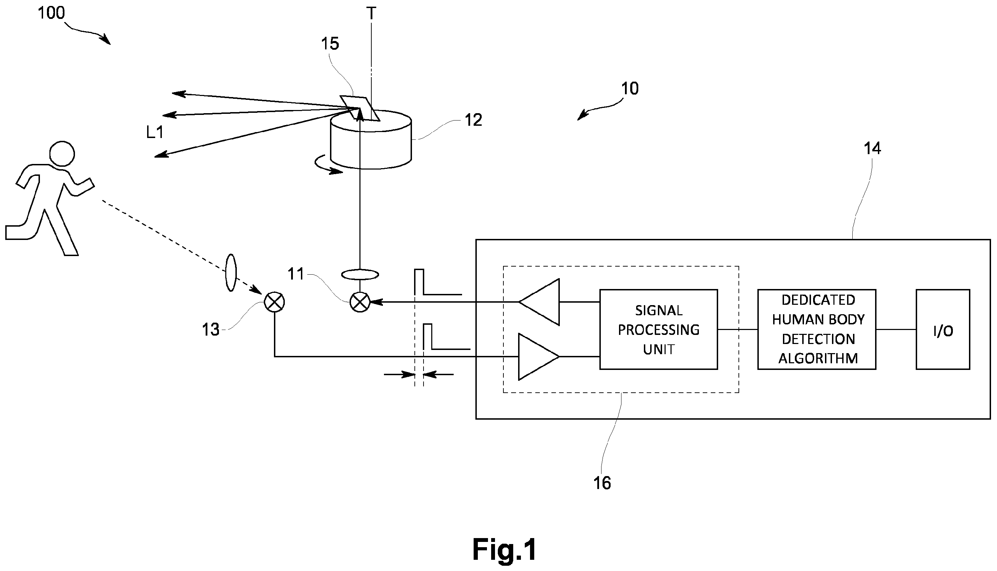

As shown in the schematic diagram of FIG 1, the scan sensor 100 has a sensor unit 10 that detects objects, such as intruders, entering a surveillance area that is set in advance, and the sensor unit 10 includes a light source 11, a scanning mechanism 12 that scans the light emitted from the light source 11, a photodetector 13 that receives reflected light reflected off the object subject to detection, and a control apparatus 14 that transfers signals between the light source 11 and the photodetector 13.

The light source 11 emits light that is scanned along the surveillance area described above. Moreover, the surveillance area will be described in greater detail below.

The light source 11 of this embodiment is a laser light source that emits laser light and, specifically, the light source 11 receives a control signal from the control apparatus 14 and emits a pulse of laser light.

Note that the light source 11 is not limited to a laser light source, but may also be an emitter that emits radio waves or other electromagnetic waves, such as millimeter waves, microwaves, or ultrasonic waves.

The scanning mechanism 12 scans the light emitted from the light source 11 along a predetermined plane. Hereafter, the light scanned along this predetermined plane is referred to as first scanning light L1.

As shown in FIG 1, the sensor unit 10 in this embodiment has a mirror 15 that reflects light emitted from the light source 11, and the scanning mechanism 12 rotates this mirror 15 around a predetermined axis T. As a result, the first scanning light L1 is light that is rotated and scanned around the predetermined axis T.

More specifically, the mirror 15 is installed in a posture inclined with respect to the laser light emitted from the light source 11, and the scanning mechanism 12 scans the laser light along the predetermined plane by rotating the mirror 15, for example using the optical axis of the light source 11 as the rotation axis.

It is also possible for the scanning mechanism 12 to instead be one that scans the light emitted from the light source 11 along a predetermined plane by rotating the light source 11 around a predetermined rotation axis, in which case the sensor unit 10 need not include a mirror 15.

The photodetector 13 detects reflected light reflected off of objects present in the surveillance area described above, and outputs a photodetection signal to the control apparatus 14 indicating that a detection has occurred.

The photodetector 13 in this embodiment is a photodiode, such as an APD, that receives the laser light. However, the photodetector 13 is not necessarily limited to this and, for example, may be changed according to the type of light source 11.

The control apparatus 14 is physically equipped with at least an information processing circuit consisting of a CPU, memory, and so on, the CPU and other peripherals working together in accordance with a program stored in said memory to function as an object detection unit that detects objects in the surveillance area based on the photodetection signal from the aforementioned photodetector 13.

In other words, the surveillance area of the scan sensor 100 is the range in which objects can be detected and is a range for which a signal (alarm) is output indicating that an object has been detected.

The scan sensor 100 of this embodiment is a so-called LiDAR (light detection and ranging) sensor, and the control apparatus 14 is equipped with a TOF circuit 16, as shown in FIG 1.

In other words, the control apparatus 14 in this embodiment functions as a distance measurement unit that measures the distance to the detected object by measuring the time from when the light source 11 emits a pulse of laser light until the laser light is received after having been reflected off the detected object and converting the measured time into distance, and also functions as a position acquisition unit that acquire coordinates, which are position information of the detected object, from the angle of the received laser light.

However, the control apparatus 14 should at least function as an object detection unit, and does not necessarily have to function as one or both of the distance measurement unit and position acquisition unit.

As mentioned above, the scan sensor 100 of this embodiment is designed to prevent access to the shelf, and the shelf can be said to be the object of interest X for which crime prevention is sought.

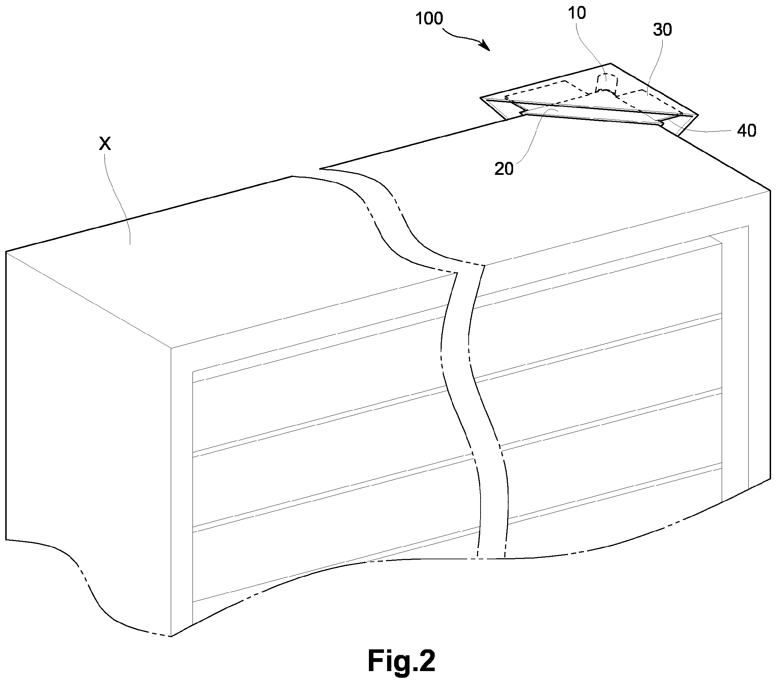

Therefore, as shown in FIG 2, the sensor unit 10 is designed to be attached to a shelf, which is the object of interest X of the crime prevention. In other words, the sensor unit 10 of this embodiment is attached to an object of interest X that has a rectangular cuboid shape or a cubic shape.

It should be noted that the term 'rectangular cuboid shape' as used herein refers not only to a strict rectangular cuboid but also to shapes that are slightly deformed from a rectangular cuboid, and the term 'cubic shape' as used herein refers not only to a strict cube but also to shapes that are slightly deformed from a cube.

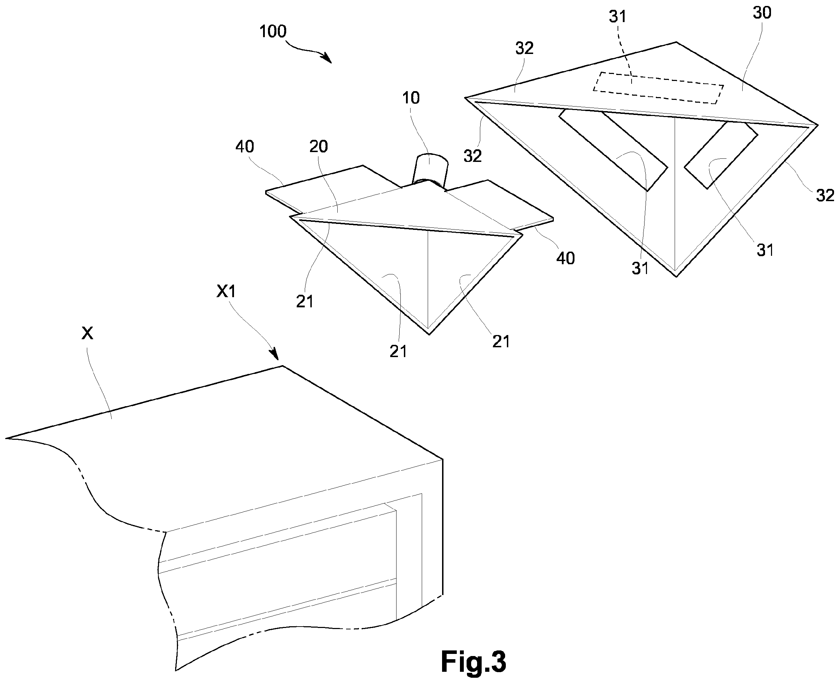

As shown in FIG 2 and FIG 3, the scan sensor 100 of this embodiment further includes a holding body 20 that holds the sensor unit 10, and the sensor unit 10 is attached to the object of interest X via the holding body 20.

The holding body 20 can be equipped to one of the vertex portions X1 of the object of interest X and, in this case, it is equipped on the outside of the object of interest X onto the vertex portion X1 located at the corner of its top surface. The vertex portion X1 referred to here is not strictly limited to the vertex, but also includes a region slightly away from the vertex.

As shown in FIG 3, the holding body 20 has a triangular pyramid shape with installation surfaces 21 that run along the three flat surfaces included in the vertex portion X1 of the object of interest X. The sensor unit 10 is equipped to the vertex portion of the holding body 20 via, for example, a mounting member not shown.

With such a configuration, by arranging the vertex portion of the holding body 20 to overlap the vertex portion X1 of the object of interest X, each of the installation surfaces 21 are installed to the three flat surfaces of the object of interest X, and the sensor unit 10 is equipped to the vertex portion X1 of the object of interest X via the holding body 20.

Although it is desirable for the holding body 20 to have three installation surfaces 21 as described above in order to easily install the holding body 20 onto the object of interest X, the specific shape is not limited to a triangular pyramid shape and may be altered as needed.

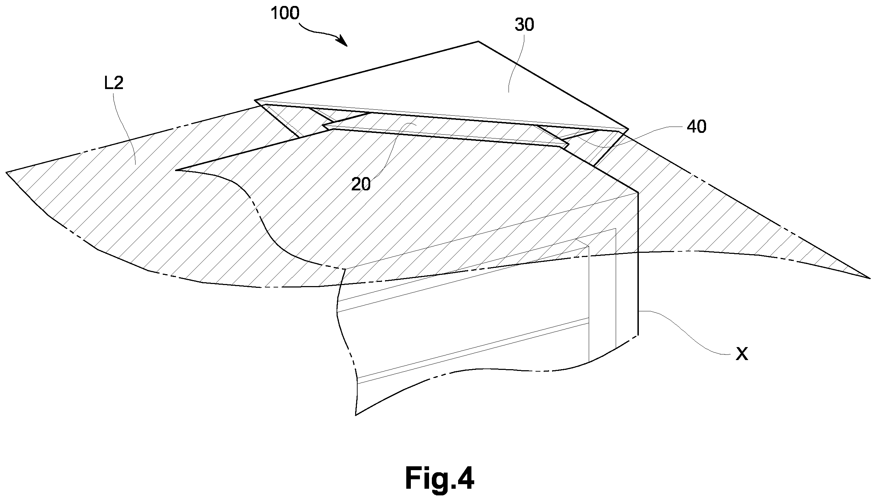

As shown in FIG 4, the scan sensor 100 of this embodiment is further provided with an optical system 30 that converts the first scanning light L1, which is scanned along the predetermined plane described above, into a second scanning light L2, which is scanned along three planes that are different from said predetermined plane and are orthogonal to each other.

In FIG 4, for convenience of explanation, the second scanning light L2 that scans along the top surface of the object of interest X is shown, and the second scanning light L2 that scans along the other two planes is omitted.

The optical system 30 converts the first scanning light L1 into a second scanning light L2 that is scanned along a plurality of planes surrounding at least part of the object of interest X, and the entire region where this second scanning light L2 is scanned is set as the surveillance area. However, it is also possible for only a part of the region where the second scanning light L2 is scanned to be set as the surveillance area.

In this embodiment, the surveillance area is set along at least three planes of the object of interest X that has a rectangular cuboid shape or a cubic shape; in other words, the three planes that are scanned by the second scanning light L2 are a plane along the horizontal direction and two mutually orthogonal planes along the vertical direction.

The term 'plane along the horizontal direction' herein refers to a concept that includes not only a plane parallel to the horizontal direction, but also a plane slightly tilted relative to the horizontal direction, and the term 'plane along the vertical direction' refers to a concept that includes not only a plane parallel to the vertical direction, but also a plane slightly tilted relative to the vertical direction.

As shown in FIG 3 and FIG 4, the optical system 30 is connected to the above-mentioned holding body 20 via a connecting portion 40 and, thereby in a state of being in a determined position with respect to the sensor unit 10, converts the first scanning light L1 into the following: a second scanning light L2 that is scanned along the top surface of the object of interest X, a second scanning light L2 that is scanned along one side surface orthogonal to the top surface, and a second scanning light L2 that is scanned along another side surface orthogonal to the top surface.

In this embodiment, the first scanning light L1 is set to be scanned by rotation through 360 degrees around the predetermined axis T, and the optical system 30 can be said to divide this rotationally scanned first scanning light L1 into second scanning light L2 along three mutually orthogonal planes.

Moreover, the sensor unit 10 of this embodiment is capable of changing the angular range in which the first scanning light L1 is rotationally scanned, and by appropriately changing this angular range, the scanning range of the second scanning light L2 in each of the three planes can be changed.

As shown in FIG 3, the optical system 30 has a plurality of mirrors 31 which are optical elements that convert the first scanning light L1 into the second scanning light L2 by reflecting it, and also has an exterior member 32 which holds these mirrors 31.

The mirrors 31 have reflective surfaces that reflect the first scanning light L1, and are provided each corresponding to one of the three planes in which the second scanning light L2 is scanned. The reflective surfaces of these mirrors 31 are provided surrounding the vertex portion X1 to which the above-mentioned sensor unit 10 is attached. With this configuration, the first scanning light L1, which is rotationally scanned around a predetermined axis, is reflected by each of the reflective surfaces and converted into the second scanning light L2 along each of the three planes.

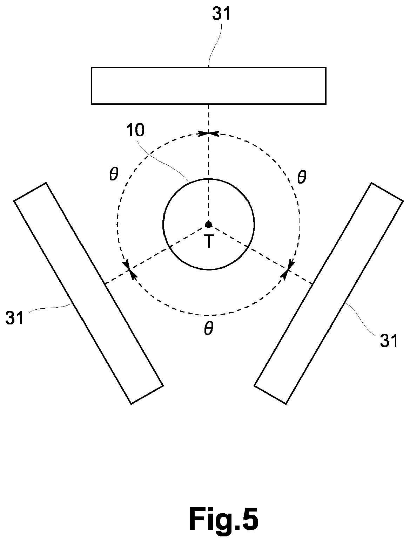

As shown in the schematic diagram of FIG 5, the mirrors 31 are arranged so that each of the angles θ formed around the predetermined axis T, which is the center of rotation of the first scanning light L1, is a prescribed angle. If the object of interest X has a cubic shape, an example arrangement is one in which, when looking down on the vertex of the object of interest X, the three mirrors 31 are arranged at intervals of 120 degrees around the predetermined axis T.

Although the distance from the predetermined axis T to each mirror 31 is here made to be an equal distance, the distances from the predetermined axis T to each mirror 31 may be different from each other.

An exterior member 32 is provided for each of the mirrors 31 and in this embodiment the exterior members 32 are integrally formed, as shown in FIG 3. More specifically, the three exterior members 32 are arranged to form a triangular pyramid shape, and each exterior member 32 holds each mirror 31 so that the reflective surface of each mirror 31 faces the sensor unit 10, in other words, such that the reflective surface of each mirror 31 surrounds the sensor unit 10.

Moreover, the exterior members 32 do not necessarily need to be one body, and some or all of the exterior members 32 may be a separate body.

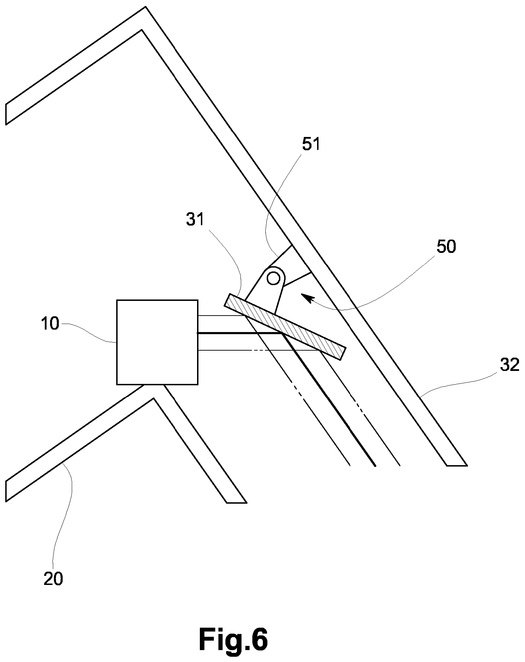

As shown in FIG 6, the scan sensor 100 of this embodiment has an optical adjustment mechanism 50 that is interposed between the mirror 31 and the exterior member 32 to adjust the position or angle of the mirror 31. However, the scan sensor 100 according to the present invention does not necessarily need to be equipped with an optical adjustment mechanism 50.

The optical adjustment mechanism 50 of this embodiment moves the mirror 31 relative to the exterior member 32, and an example of a specific configuration may include a rotating member 51 that rotatably supports the mirror 31, which is an optical element of the optical system 30, and a power transmission mechanism (not shown) that transmits the power for rotating the rotating member 51 to the rotating member 51. The power transmission mechanism may be, for example, a mechanism using a rack-and-pinion, or a mechanism using one or a plurality of cams or gears.

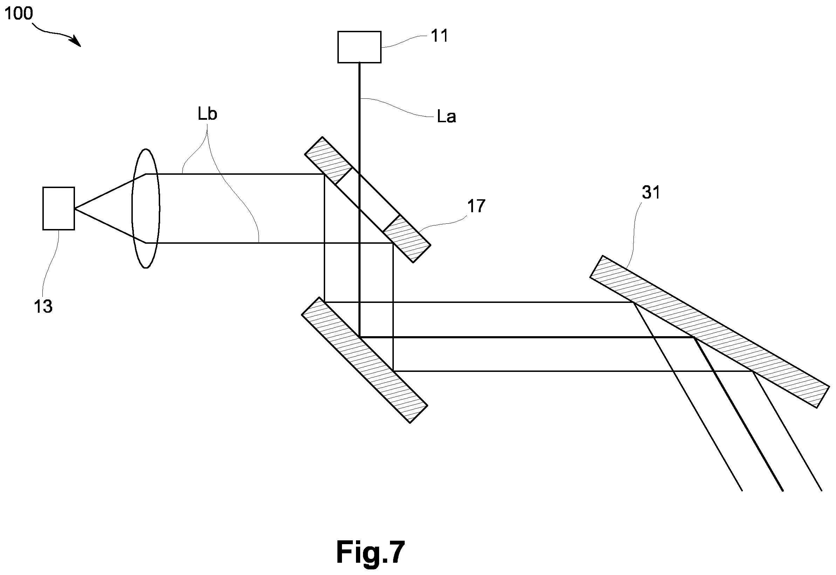

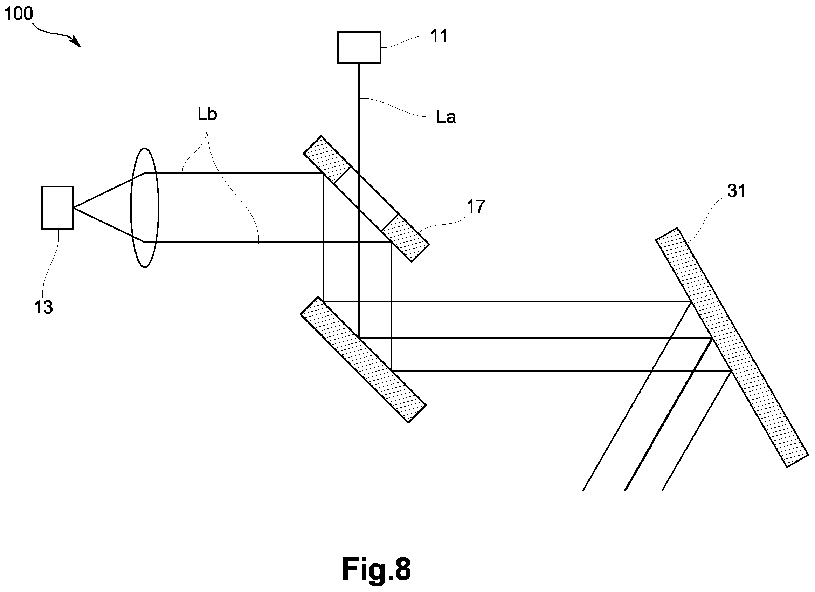

In such a configuration, as shown in the schematic diagram in FIG 7, the optical adjustment mechanism 50 may be configured to adjust the optical system 30 so that the second scanning light L2 is directed at a more acute angle than the direction orthogonal to the first scanning light L1, or may be configured to adjust the optical system 30 so that the second scanning light L2 is directed at a more obtuse angle than the direction orthogonal to the first scanning light L1, as shown in the schematic diagram in FIG 8.

Moreover, the configuration in which the second scanning light L2 is directed at an acute angle with respect to the first scanning light L1 (FIG 8) makes for a more compact device than the configuration in which the second scanning light L2 is directed at an obtuse angle with respect to the first scanning light L1 (FIG 7), to such an extent that the mirror 31, which is an optical element, not need be enlarged.

Via this configuration, even if the top surface or the side surface of the shelf, which is the object of interest X for crime prevention, is slightly inclined with respect to the horizontal plane or the vertical plane, the position or angle of the optical system 30 can be adjusted according to this inclination and the three planes of the surveillance area can be set optimally, improving detection reliability.

Furthermore, for example, if the second scanning light L2 is scanned in a direction orthogonal to a wall surface or a floor surface, there is a risk of a false detection occurring due to reflection of the second scanning light L2 off the wall surface or the floor surface, but the configuration described above allows the second scanning light L2 to be directed at an acute angle or an obtuse angle to the first scanning light L1, rather than orthogonal to it, to avoid the second scanning light L2 from reflecting off the wall surface or floor surface, thereby preventing the false detection described above.

Furthermore, this allows for greater freedom in setting the direction of the second scanning light L2, making it possible to meet various requirements at the installation site.

Moreover, the configuration shown in FIG 7 and FIG 8 makes use of a mirror 17 that has a passage hole that allows emitted light emitted from the light source 11 or reflected light reflected off an object to pass through it, and reflects other light, and this allows the projection path La of the emitted light and the receiving path Lb of the reflected light to be partially shared, thereby reducing the number of parts included and making the system more compact.

### Effect of this Embodiment

A scan sensor 100 according to this configuration is provided with an optical system 30 that converts the first scanning light L1, which is scanned along a predetermined plane, into a second scanning light L2, which is scanned along three planes that are different from said predetermined plane and are orthogonal to each other, and therefore a single scan sensor 100 can be used to scan scanning light along the three planes that are orthogonal to each other.

As a result, the number of sensors required can be reduced compared to a configuration in which one sensor can scan scanning light in only one plane, so that it is possible to scan scanning light along at least three planes surrounding an object of interest X of crime prevention while reducing the labor of installing a sensor, as well as minimizing the costs thereof.

In addition, since the three planes that are scanned by the second scanning light L2 are a plane along the horizontal direction and two mutually orthogonal planes along the vertical direction, it is conducive to the crime prevention for objects of interest X that has a rectangular cuboid shape or cubic shape, such as a shelf.

Since the optical system has reflective surfaces each of which corresponds to one of the three planes, the first scanning light can be converted to the second scanning light via a reasonable configuration; for example, the second scanning light can be scanned over a wide range in each plane while keeping the distance from the first scanning light to the reflective surface short. This enables high-density scanning of the second scanning light in three planes while keeping the product compact.

Furthermore, since the reflective surface of mirror 31 is provided around a vertex portion X1 of the object of interest X, which has a rectangular cuboid shape or a cubic shape, and the sensor unit 10 is attached to the vertex portion X1, the surveillance area can be set along the three planes of the object of interest X via a simple configuration.

Since the holding body 20 is equipped to the vertex portion X1 and the sensor unit 10 is held by the holding body 20, the sensor unit 10 can be more easily installed onto the object of interest X.

### Other Embodiments

Moreover, the present invention is not limited to the embodiment described above.

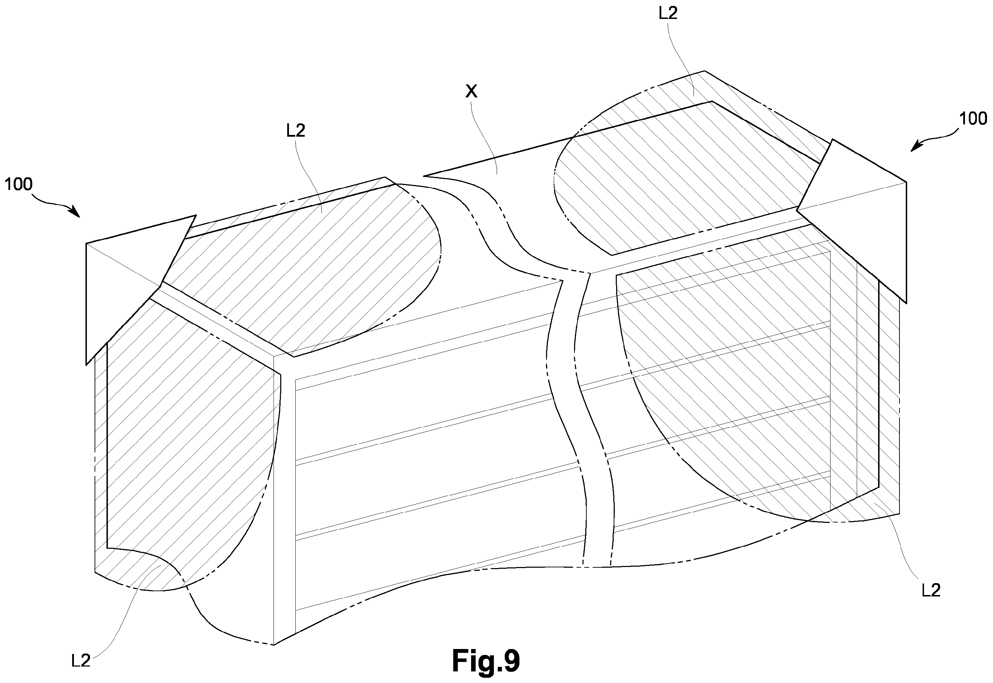

For example, in the above embodiment, the surveillance area was set to be along three planes of the object of interest X by using one scan sensor 100 but, as shown in FIG 9, it is also possible for the surveillance area to be set along five planes of the object of interest X, excluding the bottom surface, by using two scan sensors 100.

In such a case, it could be conceived of, for example, for each of the scan sensors 100 to be installed at each of two vertex portions X1 along a diagonal on the top surface of the object of interest X.

In such a case, however, the top surface of the object of interest X is scanned by the second scanning light L2 of one of the scan sensors 100 as well as by the second scanning light L2 of the other scan sensor 100 and, as a result, the second scanning light L2 of one scan sensor 100 is detected by the other scan sensor 100, which may lead to false detection.

Therefore, it is preferable for the scan sensor 100 according to the present invention to be capable of changing the surveillance area in each of the three planes independently.

For example, a specific embodiment for independently changing the surveillance area is one that changes the scanning range of the second scanning light L2 in each of the three planes by changing the rotationally scanned angular range of the first scanning light L1 described in the previous embodiment.

Or, another possible embodiment is one that maintains the scanning range of the second scanning light L2 while being able to change the region within the scanning range where an object can be detected, or is able to change the range within the scanning range for which a signal (alarm) is output indicating that an object has been detected.

Specifically, for example, if the second scanning light L2 from both of the two scan sensors 100 is scanned along the top surface of the object of interest X, by modifying one of the scan sensors 100 so that it does not detect the presence of an object due to the second scanning light L2 scanned along the top surface, or by it not outputting a signal (alarm) indicating a detection even if an object is detected, for one of the scan sensors 100 the surveillance area along the top surface may be changed (eliminated) independently of the surveillance areas along the other side surfaces.

Thus, for example, one plane of the three planes can be excluded from the surveillance area, preventing the aforementioned false detection due to the use of two scan sensors 100.

Moreover, if a switch or other operating unit operated by many people is installed on the side surface of the object of interest X such as a shelf, the side surface of the object of interest can be excluded from the surveillance area to remove the switch or other operating unit from the surveillance.

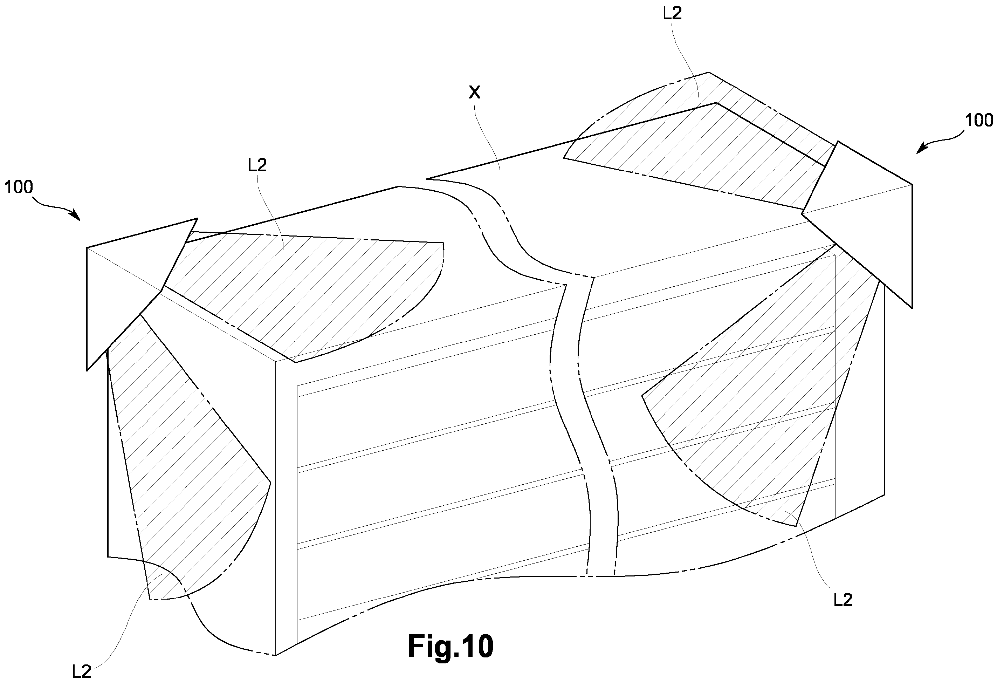

Furthermore, as shown in FIG 10, it is also possible for the scanning ranges for scanning the second scanning light L2 to be set in each plane independently of each other. In other words, the scanning range of the second scanning light L2 need not necessarily be set over the entire plane of the object of interest X, but only a portion of that plane.

For example, as a specific configuration, it may be configured such that the scanning range of the second scanning light L2 in each of the three planes can be set by inputting the lengths of each of the mutually orthogonal X axis, Y axis, and Z axis.

As for the optical system 30, a configuration making use of a mirror 31 as the optical element was described in regards to an embodiment discussed above but, for example, a configuration making use of a prism or other optical element that refracts the first scanning light L1 is also possible.

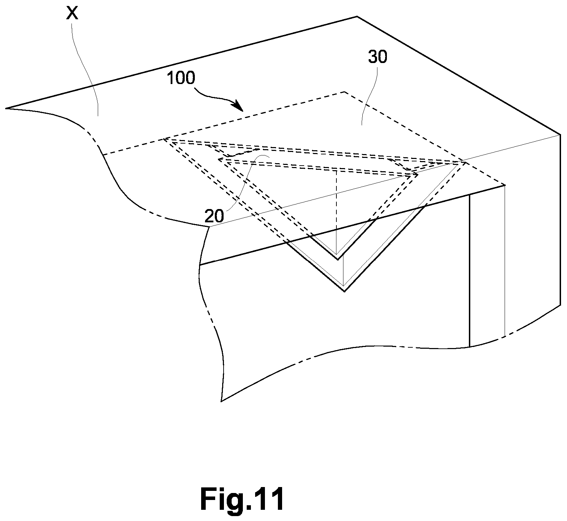

As for the holding body 20, it was discussed as being equipped to the vertex portion X1 of the object of interest X from the outside in the aforementioned embodiment but, as shown in FIG 11, if the object of interest X such as a shelf is accessible from the inside, it may be equipped to the vertex portion X1 of the object of interest X from the inside. In other words, the sensor unit 10 held in this holding portion may be equipped to the outside of the vertex portion X1 of the object of interest X, or it may be equipped to the inside of the vertex portion X1 of the object of interest X.

Furthermore, in the above-described embodiment, the sensor unit 10 was provided at the vertex portion X1 of the object of interest X via the holding body 20, but the sensor unit 10 need not necessarily be provided at the vertex portion X1, but may be provided on a given surface or edge of the object of interest X.

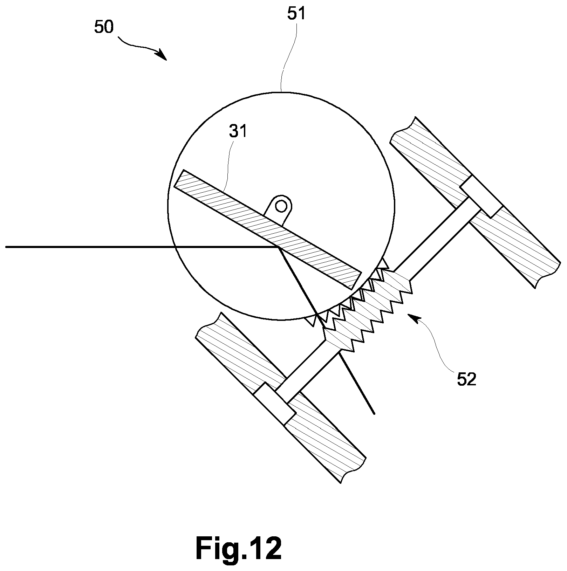

Moreover, as shown in FIG 12, the power transmission mechanism 52 that constitutes the optical adjustment mechanism 50 may be, for example, a mechanism using a rack-and-pinion, or a mechanism using one or a plurality of cams or gears.

Needless to say, the present invention is not limited to the aforementioned embodiments, and various other variations are possible without departing from the intent of the invention.

### Industrial Applicability

According to the present invention, it is possible to scan scanning light along a plurality of planes surrounding an object of crime prevention while reducing the labor of installing a sensor, as well as minimizing the costs thereof.

### Reference Sign List

100 scan sensor
X objects of interest (shelf)
10 sensor unit
11 light source
12 scanning mechanism
13 photodetector
14 control apparatus
15 mirror
T predetermined axis
20 holding body
21 installation surface
30 optical system
31 mirror
L1 first scanning light
L2 second scanning light
40 connecting portion
50 optical adjustment mechanism

## Claims

1. A scan sensor comprising: a sensor unit including a light source and a scanning mechanism that scans light emitted from the light source along a predetermined plane, and
an optical system that converts first scanning light that is scanned along the predetermined plane into second scanning light, which is scanned along three planes that are different from the predetermined plane and are orthogonal to each other.

2. The scan sensor according to claim 1, wherein the three planes are a plane along a horizontal direction and two mutually orthogonal planes along a vertical direction.

3. The scan sensor according to claim 1, wherein the optical system includes reflective surfaces each of which corresponds to one of the three planes, and
the first scanning light is light that is rotationally scanned around a predetermined axis and is reflected by each of the reflective surfaces.

4. The scan sensor according to claim 3, wherein the reflective surfaces are provided around a vertex portion of an object of interest that has a rectangular cuboid shape or a cubic shape, the sensor unit being attached to said vertex portion.

5. The scan sensor according to claim 4, further comprising a holding body that is attachable to the vertex portion, and the sensor unit is held by the holding body.

6. The scan sensor according to claim 1, further comprising an optical adjustment mechanism that adjusts the position or the angle of the optical system.

7. The scan sensor according to claim 6, wherein the optical adjustment mechanism adjusts the optical system so that the second scanning light is, with respect to the first scanning light, directed at an acute angle or obtuse angle relative to an orthogonal direction.

8. The scan sensor according to claim 1, wherein a surveillance area in each of the three planes can be changed independently.
